# EUROPÄISCHE PATENTSCHRIFT

(11) **EP 0 976 556 B1**
(45) Veröffentlichungstag und Bekanntmachung des Hinweises auf die Patenterteilung: **02.05.2002**
(21) Anmeldenummer: 99111777.1
(22) Anmeldetag: 18.06.1999
(51) Int. Cl.: B41F 33/00

(54) **Wartungs- und Inspektionssystem für eine Druckmaschine**
Maintenance and diagnosis system for a printing machine
Système d'entretien et diagnostic pour une machine d'impression

(30) Priorität: 18.07.1998 DE 19832453; 18.07.1998 DE 29812844 U
(43) Veröffentlichungstag der Anmeldung: 02.02.2000
(73) Patentinhaber: MAN Roland Druckmaschinen AG, 63075 Offenbach (DE)
(72) Erfinder: Schmitt-Kallenbach, Martin, 63165 Mühlheim (DE); Sirowitzki, Heiner, 65205 Wiesbaden (DE); Haas, Hanns-Otto, 63150 Heusenstamm (DE); Lindner, Bernd, 63150 Heusenstamm (DE)

(56) Entgegenhaltungen:
- EP-A- 0 243 661
- EP-A- 0 436 818
- EP-A- 0 727 313
- EP-A- 0 763 428
- EP-A- 0 829 352
- DE-A- 3 630 876
- PATENT ABSTRACTS OF JAPAN vol. 013, no. 041 (M-791), 30. Januar 1989 (1989-01-30) & JP 63 249656 A (KOMORI PRINTING MACH CO LTD), 17. Oktober 1988 (1988-10-17)

## Beschreibung

Die Erfindung betrifft eine Druckmaschine gemäß dem Oberbegriff von Anspruch 1.

Druckmaschinen und insbesondere Bogenoffsetdruckmaschinen weisen eine Vielzahl eine begrenzte Lebens- bzw. Einsatzdauer aufweisende Einzelteile auf. Weiterhin müssen auch bestimmte Arbeitsmittel sowie Verbrauchsstoffe von Zeit zu Zeit ausgewechselt bzw. erneuert werden. Bei Bogenoffsetdruckmaschinen ist die Zahl der einem Verschleiß unterliegenden Teile wegen der Komplexität des Bogentransportes besonders hoch. Die aus Gummi bestehenden Elemente der Trenn- und Schleppsauger im Anleger verschleißen in Abhängigkeit der Art der transportierten Bedruckstoffe, da rauhes Papier die Dichtigkeit der Saugelemente herabsetzt. Auch die Transportbänder des den Bogentransport zwischen Anlegerstapel und Anlage der Druckmaschine bewirkenden Fördertisches verschleißen aufgrund des Zusammenwirkens mit dem Bedruckstoff, ferner auch wegen der zu deren Betrieb notwendigen Spannung. Darüber hinaus unterliegen aus Gummi bzw. Elastomeren bestehende Bauteile einer von der Einsatzzeit abhängigen Versprödung, so daß diese Elemente unabhängig von deren Beanspruchung nach bestimmten Zeiten auszuwechseln sind.

Auch die den Bogentransport innerhalb sowie zwischen den einzelnen Druckwerken bewirkenden Greifer (Greiferauflagen) unterliegen einem Verschleiß. Dieser Verschleiß ist von der Rauhigkeit der transportierten Bedruckstoffe abhängig, ferner von der Anzahl der durchgeführten Bogentransporte und auch von der Druckgeschwindigkeit. Verschlissene Bogengreifer bzw. Greiferaufschläge machen sich insbesondere durch Passerdifferenzen bewirkende Bogenübergaben bemerkbar. Derartige Passerdifferenzen müssen dann durch zeitaufwendige Justiervorgänge des Registers der nachfolgenden Druckwerke ausgeglichen werden. Während derartiger Registerkorrekturvorgänge entsteht Makulatur. Das Auswechseln verschlissener Greifer bzw. Greiferaufschläge sowie deren Justage ist ein zeitaufwendiger und lange Stillstandszeiten der Maschine verursachender Vorgang.

Weitere Verschleißteile sowie Verbrauchsstoffe einer Bogenoffsetdruckmaschine sind die Gummitücher in den einzelnen Druckwerken, die Schmierstoffe in den Getrieben des Haupt- und der Nebenantriebe, die mit sich drehenden Walzen zusammenwirkenden Spitzen von Dosierelementen, die Schmierstoffe insbesondere für die Greifermechanismen und die der weiteren bewegten Teile in den Zylindern sowie die Zahn- und Keilriemen.

Um durch den plötzlichen Ausfall derartiger Teile bedingte Produktionsausfälle und somit längere Stillstandszeiten der Maschine während einer Produktion zu vermeiden ist es nötig, daß die Druckmaschine und ihre entsprechende Elemente regelmäßig gewartet und verschlissene Elemente ausgetauscht sowie verbrauchte Stoffe erneuert werden. Wegen der Vielzahl einem Verschleiß unterliegenden Elemente sowie deren unterschiedliche Standzeiten (abhängig von der Zeit bzw. den Arbeitszyklen) werden von den Maschinenherstellern in Verbindung mit den Herstellern der jeweiligen Komponenten Wartungsintervalle festgelegt, die unbedingt einzuhalten sind. Aber auch ein striktes Einhalten der Wartungsintervalle sowie das Ausführen der darin vorgesehenen Maßnahmen ist kein Garant gegen plötzliche Produktionsausfälle. Der Grund hierfür liegt in der eingangs angedeuteten Verschleißabhängigkeit bestimmter Elemente von der Art der durchgeführten Produktion, beispielsweise der Art der benutzten Bedruckstoffe, der verdruckten Farben sowie weiterer Produktionsgegebenheiten (Druckgeschwindigkeit, Häufigkeit von Druckunterbrechungen und ähnliches). Die nötigen Wartungsintervalle für bestimmte Elemente (z.B. Keilriemen oder Zahnriemen) können bei regelmäßiger Überwachung bestimmter Parameter sowie deren Korrektur auch beträchtlich verlängert werden. Die regelmäßige Überwachung der Spannung eines Zahnriemens / Keilriemens erhöht bekanntlich deren Einsatzzeit, so daß der Zeitpunkt für eine zeitaufwendige Auswechselung beträchtlich herausgezögert werden kann. Auch die Qualität von Verbrauchsstoffen wie beispielsweise dem Getriebeöl oder den Gummitüchern in den einzelnen Druckwerken wirkt sich entscheidend auf die nötigen Wartungs- und Inspektionsintervalle der entsprechende Komponenten aus. Die Verwendung eines kostengünstigen aber qualitativ niedrigeren Öles macht in Verbindung mit den Produktionsgegebenheiten während dessen Einsatzes unter Umständen häufigere Ölwechsel nötig als die Verwendung eines anderen Schmierstoffes. Eine starke Abhängigkeit von der Art der verwendeten Bedruckstoffe zeigt dabei die Art der verwendeten Gummitücher.

### [Stand der Technik]

Bekannt aus dem Kraftfahrzeugbau sind Wartungs- und Inspektionssysteme, bei welchen aus Sensordaten des Motores, des Getriebes, des Fahrwerkes und der Karosserie in Verbindung mit Vorgabedaten die Häufigkeit der auszuführenden Wartungsarbeiten (Inspektionsintervalle) ermittelt wird. Die nötigen Inspektionsintervalle werden somit nicht nur fest auf die Zeit bzw. den Kilometerstand bezogen sondern zusätzlich in Abhängigkeit der während beim Betriebs des Fahrzeuges vorherrschenden Beanspruchung. So kann ein Inspektionsintervall durch häufiges Langstreckenfahren unter nicht zu hoher Beanspruchung deutlich länger festgesetzt werden als dies bei häufigen Material beanspruchenden Kurzstreckenfahrten gleicher Km-Zahl der Fall ist. Diese Wartungs- und Inspektionssysteme lassen aber die künftig erfolgenden, geplanten Einsatzzwecke des Fahrzeuges völlig außer acht.

Bei Druckmaschinen ist es bekannt, spezielle Komponenten zusätzlich auf Verschleiß bzw. Verbrauch hin zu überwachen. Beispiele hierfür sind die Füllstandsüberwachungen von Betriebsstoffe bereitstellenden Behältern wie beispielsweise Ölvorrat, Feuchtmittel, Farbe, Puder und dergl.. Weiterhin ist es bei Druckmaschinen bekannt, sensorisch die Temperatur von Zylinderlagern zu überwachen, da ein abnormes Temperatur-Zeitverhalten auf zu erwartende Schäden hinweist. Auch die Spannung von Keilriemenantrieben kann durch Erfassen des Schlupfes überwacht werden, wobei bei zu hohen Schlupfwerten ein entsprechendes Fehlersignal generiert wird.

Auch im Bereich der Elektronik von Druckmaschinen sind Überwachungs- und Diagnosesysteme bekannt. Durch eine zusätzliche Sensorik kann beispielsweise der Abnutzungsgrad von Kontakten (Bürsten) der Kommutatoren von Gleichstrommotoren überwacht werden. Hierbei werden Fehlersignale aber erst dann generiert, wenn die Kontakte / Bürsten über ein bestimmtes Maß hinaus verschlissen sind. Präventive Wartungsmaßnahmen lassen sich durch ein derartiges System nicht generieren.

Um die Greifersysteme auf den rotierenden Zylindern mit Schmierstoff zu versehen ist es nötig, Verschutzungselemente der Maschine zu öffnen (Klapptritte, Schiebeschutze und dgl.) und per Tippbetrieb die Maschine in eine bestimmte Position zu verfahren. Das Anfahren der bestimmten Position erfolgt durch generieren bestimmter Steuerbefehle seitens der Maschinensteuerung, wobei diese Steuerbefehle dem Hauptantrieb der Maschine zugeführt werden. Weist die Druckmaschine einen Winkelgeber (Absolutwinkelgeber, Inkrementalgeber) auf, so ist es auch möglich, festprogrammierte (Wartungs-)Positionen vorzugeben, die manuell ausgelöst automatisch angefahren werden.

Insbesondere das automatischen Anfahren bestimmter Positionen erleichtert dem Bedienpersonal das Ausführen der entsprechenden Arbeiten, jedoch muß das Bedienpersonal die Reihenfolge der einzelnen Arbeiten streng einhalten, um insbesondere Maschinenschäden durch Kollision bewegter Teile usw. zu vermeiden. Auch ist es beim Ausführen von Justierarbeiten nötig, bestimmte Arbeitsschritte in einer vorgesehenen Weise aufeinanderfolgend auszuführen. Tritt ein Maschinenschaden auf, so ist die Ursache bzw. das auslösende Ereignis oft nicht nachvollziehbar, da es nicht auszuschließen ist, daß das Bedien- bzw. Wartungspersonal die entsprechende Wartungsarbeit nicht entsprechend der Anleitung ausgeführt hat (Reihenfolge der Arbeitsschritte).

Bei einer Vielzahl von Schritten umfassenden Wartungsarbeiten ist es auch nicht auszuschließen, daß bestimmte Arbeiten abweichend von der vorgesehenen Arbeitsfolge ausgeführt werden, da bestimmte Maschinenstellungen (Anfahren der Position) dadurch entfallen. Dem Bedien- bzw. Wartungspersonal ist es dabei oft nicht bewußt, daß, obwohl die gleiche Maschinenstellung eingenommen wird, zuvor jedoch eine eine andere Maschinenposition bedingende Wartungsarbeit ausgeführt werden muß. Ein derartiges Einsparen von Anfahrvorgängen für Maschinenpositionen und somit das Umstellen der Arbeitsabfolge ist im nachhinein ebenfalls nicht nachvollziehbar, so daß bei auftretenden Störungen bzw. Maschinenschäden die Ursache nicht feststellbar ist und anfallende Reparaturen / Fehlerbehebungsmaßnahmen sehr aufwendig gestalten.

Aus der DE 43 27 848 C2 ist eine Überwachungseinrichtung für eine Druckmaschine bekannt, bei der die Signale einzelner Endschalter / Sensoren oder sonstiger Signalgeber von Verschutzungselementen / Not-Aus-Tastern in Verbindung mit der durch den Antrieb der Druckmaschine gefahrenen Drehzahl ausgewertet werden. Bei geöffneten Schutzen darf die Maschine nur eine höchstmöglich zulässige Drehzahl fahren, was durch die die Signale der Sensoren, Endschalter und Taster erfassende Überwachungseinrichtung ermittelt wird. Diese Überwachungseinrichtung generiert auch die höchstmöglich zulässige Drehzahl. Wird eine Abweichung der tatsächlich gefahrenen Ist-Drehzahl der Maschine (des Antriebes) von der durch die Überwachungseinrichtung ermittelten höchstmöglich zulässigen Drehzahl festgestellt, so erfolgt ein Stillsetzen des Antriebes und das Einlegen einer elektromagnetisch betätigbaren Bremse. Diese Überwachungseinrichtung ermöglicht jedoch nicht das Nachvollziehen von Wartungsarbeiten.

Aus der DE-A-3 630 876 ist ein Produktionsprozesssteuerungssystem für eine Zeitungsdruckvorrichtung bekannt, bei welchem die einzelnen Stationen und Abteilungen der Druckerei jeweils über Rechner gesteuert und insgesamt über ein Netzwerk miteinander verbunden sind. So können die an einem bestimmten Ort anfallenden Daten und Signale auch an anderen Stationen verwendet werden.

Aus der EP 0 829 352 A2 ist ein Diagnosesystem für eine Rotationsdruckmaschine bekannt, bei welchem zur Überwachung von rotierenden Bauteilen bezüglich Verschleiss und Schäden an dem Bauteil Drehimpulsgeber angebracht sind, deren Signale mit einem Mustersignal verglichen werden.

### [Aufgabe der Erfindung]

Aufgabe der vorliegenden Erfindung ist es daher ein Diagnose- und Inspektionssystem für Druckmaschinen zu schaffen, mittels dem nötige Wartungsarbeiten weitestgehend vorausgeplant werden können und die dazu nötigen Stillstandszeiten der Maschine minimierbar sind.

Gelöst wird diese Aufgabe durch die kennzeichnenden Merkmale von Anspruch 1. Weiterbildungen der Erfindung ergeben sich aus den Unteransprüchen.

Gemäß der Erfindung ist ein mit der Steuerung der Druckmaschine, dem Leitstandrechner der Druckmaschine sowie die bisherigen verbundener sowie künftigen Produktionsdaten / Produktionsplanungsdaten erfassender Wartungsrechner vorgesehen, durch den der Istzustand der Maschine bzw. der Maschinenkomponenten in Verbindung mit den Gegebenheiten bei vorherigen Produktionen und der Planung für künftige Aufträge verarbeitbar sind. Der erfindungsgemäße Wartungs- und Inspektionsrechner erfaßt über die Maschinensteuerung Signale bzw. Daten der die einzelnen Komponenten innerhalb der Maschine erfassenden Sensoren und Signalgeber. Weiterhin werden dem Wartungs- und Inspektionsrechner über die Maschinensteuerung Daten über ausgeführte Druckaufträge beispielsweise hinsichtlich Auflagenhöhe, Papiersorte, Bedruckstoffstärke, maximale und mittlere Druckgeschwindigkeit usw. zugeführt. In dem Wartungs- und Inspektionsrechner sind in einem extra dafür vorgesehenen Speicherbereich Informationen über einen Verschleiß bzw. einem Verbrauch unterliegender Elemente / Verbrauchsstoffe abgelegt. Aufgrund der Sensorsignale in Verbindung mit den Informationen zuvor ausgeführter Druckaufträge ist es möglich, Informationen über den Verschleißgrad bestimmter Maschinenkomponenten abzuleiten. So ist es möglich, aus der Anzahl zuvor gedruckter Bogen in Verbindung mit der Bedruckstoffsorte, dem Papiergewicht, der mittleren bzw. maximalen Druckgeschwindigkeit vorheriger Druckaufträge eine Information über den Verschleißgrad der Gummiteile der Trennbzw. Schleppsauger im Anleger der Druckmaschine abzuleiten.

Erfindungsgemäß ist weiterbildend vorgesehen, daß dem Wartungs- und Inspektionsrechner Daten zuvor ausgeführter Druckaufträge zugeführt werden. Die Anzahl während bereits ausgeführter Druckaufträge auftretender Stopper kann durch den erfindungsgemäßen Wartungs- und Inspektionsrechner zusätzlich zur Ableitung eines Verschleißmaßes der Trenn- bzw. Schleppsauger ausgewertet werden. So ist durch den Wartungs- und Inspektionsrechner feststellbar, ob bei einer höheren Bogenzahl (Abfrage Bogenzähler) die Häufigkeit von Schiefbogen / Fehlbogen an der Anlage der Druckmaschine zunimmt. Zu diesem Zweck wird durch den Wartungs- und Inspektionsrechner das Signal einer Bogenkontrolle an der Anlage sowie ggf. weiterer Sensoren ausgewertet.

In ähnlicher Weise erfolgt durch den Wartungs- und Inspektionsrechner beispielsweise die Überwachung der Gummitücher in den einzelnen Druckwerken einer Bogenoffsetdruckmaschine. Auch die Gummitücher unterliegen einem Verschleiß, der zum einen aus einer direkten Beanspruchung durch den Bedruckstoff und zum anderen aus einer nachlassenden bzw. sich ändernden Kompressibilität resultiert. Um für die Gummitücher ein Verschleißmaß abzuleiten und Aussagen für einen nötigen Gummituchwechsel zu schaffen, wird durch den Wartungs- und Inspektionsrechner die gesamte Anzahl bereits gedruckter Bogen in Verbindung mit der Druckgeschwindigkeit, der Papiersorte, der Bedruckstoffstärke sowie der jeweils gewählten Druckbeistellung erfaßt und ausgewertet. Hierzu werden dem Wartungs- und Inspektionsrechner über die Maschinensteuerung die entsprechenden Signale für die jeweiligen fernansteuerbaren Stellantriebe zugeführt.

Dem erfindungsgemäßen Wartungs- und Inspektionsrechner werden eine Vielzahl in der Maschine erfaßter Sensorsignale zugeführt. Insbesondere sind dies die Signale von Temperatursensoren in den einzelnen Maschinenkomponenten, wie insbesondere Temperaturwerte von Walzen bzw. Zylinderlagern. Aus diesen Temperaturwerten in Verbindung mit den weiteren über den Leitstand der Druckmaschine eingegebenen Produktionsdaten (Bedruckstoffsorte, Art und Anzahl der zu verdruckenden Farben, Druckbeistellungen usw.) ist dann eine Information über den Lagerverschleiß bzw. über die Qualität des Schmierstoffes herleitbar. Ferner ist so entscheidbar, ob eine erhöhte Lagertemperatur aufgrund eines Lagerverschleißes bzw. verminderter Schmierstoffqualität oder aufgrund spezieller Druckauftragseigenschaften (hohe Beistellung bzw. hohe Zügigkeit der Farbe) vorliegt.

Durch den erfindungsgemäßen Wartungs- und Inspektionsrechner erfolgt nicht nur eine Einzelüberwachung verschiedener Komponenten der Druckmaschine. Vielmehr wird aus den in der zuvorstehend skizzierten Weise erfaßten Daten ein Gesamtabbild der verschiedenen Komponenten der Maschine abgeleitet, um aus dieser Fülle von Informationen dann den Zeitpunkt und den Umfang einer nächsten Wartungsarbeit (Inspektion) ableiten zu können. Dazu werden erfindungsgemäß nicht nur Informationen bereits ausgeführter Druckaufträge sondern auch Informationen über die Produktionsplanung (künftige Druckaufträge) berücksichtigt. So ist es möglich, eine über den Wartungs- und Inspektionsrechner festgestellte Wartungsmaßnahme erst nach ein oder mehreren geplanten kleineren Druckaufträgen auszuführen, da aufgrund der bei der Planung erfaßten Informationen eine erhöhte Beanspruchung der entsprechenden Komponenten nicht zu befürchten ist.

Weiterhin ermöglicht der erfindungsgemäße Wartungs- und Inspektionsrechner eine weitestgehend mögliche Konzentration von Wartungsarbeiten. Durch die individuelle Generierung von Verschleißinformationen der Vielzahl von Maschinenkomponenten ist es möglich, dem Bediener der Maschine über den Leitstand der Druckmaschine oder über einen übergeordneten Erfassungsrechner (Drucksaalsteuerung) anzuzeigen, daß zu einem bestimmten Zeitpunkt diese und jene Wartungsmaßnahmen auszuführen sind. Es wird somit nicht ein einmal festgelegter Wartungskatalog nach bestimmten Zeitintervallen bzw. Bogenzahlen ausgegeben, sondern der Umfang und die Art der nötigen Arbeiten wird anhand der jeweiligen Produktionsgegebenheiten (Historie der Maschine) in Verbindung mit den geplanten künftigen Druckaufträgen festgesetzt.

Der Vorteil des erfindungsgemäßen Wartungs- und Inspektionsrechner liegt somit darin, daß die Wartungsintervalle nicht ausschließlich aus den Betriebsstunden- und/oder Bogenzähler der Druckmaschine abgeleitet werden, sondern es wird ein Gesamtzustand der Maschine erfaßt und bewertet, um daraus dynamische Wartungsintervalle zu generieren und die für die Wartungsarbeiten nötigen Stillstandszeiten der Maschine zu minimieren.

Weiterhin werden durchgeführte Wartungsarbeiten weitestgehend selbständig erkannt und hinsichtlich deren Ausführung registriert. Darüber hinaus sind durch den erfindungsgemäßen Wartungs- und Inspektionsrechner zusätzlich über den Leitstand der Druckmaschine eingebbare Daten mit Auswirkung auf die Dynamisierung der Wartungsintervalle verwertbar. Beispielsweise sind dies die Art und die Qualität der verwendeten Schmierstoffe, zusätzliche Bewertungen (Sichtkontrolle) des Verschleißes von Saugern oder sonstigen Gummiteilen usw..

Erfindungsgemäß ist weiterbildend vorgesehen, daß durch den erfindungsgemäßen Wartungs- und Inspektionsrechner nicht nur ein Gesamtabbild der Maschine hinsichtlich deren Verschleißgrad bzw. der nötigen Wartungsarbeiten erfaßt wird, sondern daß durch diesen Rechner ebenfalls auch eine Überwachung der nötigen und jeweils auszuführenden Wartungsarbeiten erfolgt. Aufgrund der Produktionsdaten in Verbindung mit den jeweilig an der Maschine vorgenommenen Einstellungen ist es durch den Wartungs- und Inspektionsrechner möglich, festzustellen, wann die Greifersysteme und insbesondere die Schön- und Widerdruckgreifersysteme in den Zylindern mit Schmierstoff versehen werden müssen. Dies ergibt sich durch das Auswerten der Gesamtanzahl von Druckaufträgen sowie der Anzahl der Druckaufträge mit Schön- und Widerdruck. Dabei wird zusätzlich auch die Anzahl der in der jeweiligen Betriebsart gedruckten Bogen mitberücksichtigt. Sind aufgrund der Produktionsplanung die nächsten Druckaufträge reine Schöndrucksachen (keine Bogenwendung), so kann die nötige Schmiermaßnahme für die Schön- und Widerdruckgreifer individuell auf ein nächstes Wartungsintervall (Schmieren der Schöndruckgreifer) hinausgeschoben werden. Die diese Wartungsmaßnahme bedingend Stillstandszeit der Maschine verlängert sich nur unwesentlich durch diese zusätzlichen Schmierarbeiten, da die nötigen Handhabungen an der Maschine (öffnen von Tritten, Schutzgittern und dergl.) sowie die Positioniervorgänge (Anfahren bestimmter Maschinenstellungen) ohnehin durchgeführt werden müssen.

Das Überwachen festgestellter Wartungsmaßnahmen erfolgt in einfacher Weise durch das Auswerten der Signale der Maschinensteuerung in Verbindung mit dem Hauptantrieb der Druckmaschine. Wie bereits zuvorstehend angedeutet, bedingen eine Vielzahl von Wartungsmaßnahmen das Anfahren bestimmter Positionen sowie das Öffnen bestimmter Schutzgitter, Klapptritte usw.. Durch die Maschinensteuerung werden die diese Einrichtungen absichernden Endschalter / Sensoren erfaßt, ferner steht die Maschinensteuerung mit dem Hauptantrieb der Druckmaschine in Wirkverbindung, so daß sich das Anfahren vorgesehener Positionen in Verbindung mit dem Öffnen bestimmter Tritte / Schutzgitter durch den Wartungs- und Inspektionsrechner überwachen läßt.

Auch werden durch den Wartungs- und Inspektionsrechner über den Leitstand der Druckmaschine eingebbare Daten über die Art der verwendeten Schmierstoffe bzw. den Typ eventuell verwendeter Ersatzteile mitberücksichtigt. Somit ist für die Generierung eines künftigen Wartungszeitpunktes berücksichtigbar, welche Qualität der verwendete Schmierstoff bzw. welche Standzeit das verwendete Ersatzteil bzw. der verwendete Verbrauchsstoff aufweist. Die dazu nötigen Informationen enthält der Wartungs- und Inspektionsrechner in einem dafür vorgesehenen Speicherbereich, wobei erfindungsgemäß weiterbildend vorgesehen sein kann, daß diese Informationen bei von Fachpersonal ausgeführten Wartungsarbeiten ständig aktualisiert werden (z. B. Online über Datenbank). Somit kann bspw. die Freigabe einer neuen Schmierstoffsorte berücksichtigt werden, wenn dieser Schmierstoff bei der Maschineninstallation der Maschine noch nicht freigegeben war.

Der Vorteil des erfindungsgemäßen Wartungs- und Inspektionsrechners liegt insbesondere darin, daß über die Maschinensteuerung vorrangig Signale von Sensoren / Endschaltern ausgewertet werden, welche ohnehin in der Maschine angeordnet sind. Weiterhin werden durch den Wartungs- und Inspektionsrechner die Signale des Bogenzählers, der Uhr der Maschinensteuerung (Echtzeit), die Steuersignale für den Hauptantrieb der Druckmaschine sowie Steuersignale für weitere Antriebe der Maschine, während eines Druckauftrages vorgenommene Justierungen an der Farbsteuerung, den Registerfernverstellungen usw. zugeführt. Aus dieser Maschinen- und Auftragshistorie sind eine Vielzahl von Wartungsmaßnahmen betreffenden Größen ableitbar. So ist beispielsweise an der Häufigkeit und der Größe von Stellvorgängen der Farbführung ableitbar, ob eine Justage (Nulljustage) der Farbschieber nötig ist. Aus der Häufigkeit von Registerstellvorgängen ist ferner ermittelbar, ob die Bogengreifer in bzw. zwischen den Druckwerken noch einwandfrei, d.h. paßgerecht arbeiten.

Weiterhin ist aus dem Strombedarf des Hauptantriebes bzw. der weiteren Antriebe der Druckmaschine (Anleger / Ausleger) in Verbindung mit eventuell anfallenden Temperaturdaten ein Maß für den Schmierzustand der jeweiligen Getriebe ermittelbar. Durch den erfindungsgemäßen Wartungs- und Inspektionsrechner sind bestimmte Maschinenkomponenten hinsichtlich Verschleißbzw. Verbrauchszustand direkt überwachbar. Dies sind insbesondere diejenigen Elemente der Maschine, die direkt sensorisch überwacht werden. Weiterhin können durch den erfindungsgemäßen Wartungs- und Inspektionsrechner auch indirekte Informationen über den Verschleiß- bzw. Abnutzungsgrad bestimmter Maschinenelemente gewonnen werden. So ist es aufgrund einer Langzeitbeobachtung von Zylindertemperaturen möglich, auf ein eventuelles Absacken der Maschine bzw. des Maschinenfundamentes zu schließen. Weiterhin kann die thermische Beanspruchung benachbarter Maschinenkomponenten auch durch die Einschaltzeit (Dauer) eines Trockners (IR-Trockner) beurteilt werden (Austrocknen von Lagerstellen durch die Wärme des Trockners).

Durch die in der Maschine vorhandene Sensorik erfolgt in der bereits zuvorstehend skizzierten Weise eine Plausibilisierung von geforderten und angezeigten Wartungsarbeiten. Eine über den Leitstand der Druckmaschine geforderte Wartungsarbeit wird somit nicht nur manuell durch die ausführende Person quittiert sondern es wird zusätzlich durch Abfrage entsprechender Signale der Maschinensteuerung festgestellt, ob diese Wartungsmaßnahmen auch tatsächlich und insbesondere ordnungsgemäß ausgeführt wurde bzw. ausgeführt worden sein kann.

Neben der selbsttätigen Überwachung von geforderten Wartungsarbeiten werden dem Wartungs- und Inspektionsrechner aber auch manuell eingebbare Informationen zur Bildung künftiger Wartungsintervalle zugeführt. So kann vorgesehen sein, in einem speziellen Quittierungsmenü den Verschleiß ausgetauschter Elemente (Sauger / Keilriemen und dgl.) zu klassifizieren. Eine derartige Klassifikation kann beispielsweise zwischen 'stark verschlissenen' und 'Verschleiß kaum feststellbar' unterscheiden. Bevorzugt erfolgt die Berücksichtigung einer derartigen Klassifikation mit Qualitätsdaten des jeweils verwendeten Teiletyps.

Gemäß einer bevorzugten Ausführungsform der Erfindung ist vorgesehen, daß die Überwachungseinrichtung die Signale der mit den Schutzen / Tritten zusammenwirkenden Signalgeber (Endschalter, Sensoren) in Verbindung mit den Signalen des Hauptantriebes (der dem Hauptantrieb vorgeordneten Steuerung) und in Verbindung mit gespeicherten Daten dahingehend auswertet, daß auf ein ordnungsgemäßes Ausführen einer Wartungsarbeit geschlossen werden kann. Dabei wird ausgenutzt, daß beispielsweise das Schmieren der Greiferwelle eines bogenführenden Zylinders nach dem Öffnen eines Klapptrittes zwischen den Druckwerken durch Anfahren einer bestimmten Position erfolgt. Nach Anfahren dieser Position wird bei ordnungsgemäß ausgeführter Arbeit die Maschine in dieser Position eine bestimmte Zeit verharren. Erst dann erfolgt das Schließen des Klapptrittes und das ggf. Anfahren neuer Positionen.

Durch die erfindungsgemäße Überwachungseinrichtung ist eine derartige Wartungsmaßnahme in einfacher und sicherer Weise. dokumentierbar und hinsichtlich des ordnungsgemäßen Ausführungszustandes auch überprüfbar. Über den Leitstand der Druckmaschine gibt eine Bedienperson in einem speziell aufrufbaren Menü (Wartungsmenü) die entsprechend auszuführende Maßnahme ein. In der Überwachungseinrichtung sind die entsprechend anzufahrenden Positionen sowie die zeitlich dazu zu erfolgenden Signalverläufe der Endschalter der zu öffnenden / schließenden Schutzeinrichtungen abgespeichert. Durch die Überwachungseinrichtung erfolgt nun ein Aufzeichnen (Zeitverlauf) der entsprechenden Signale für den Hauptantrieb zum Anfahren der jeweils vorgesehenen Positionen sowie die Zeitverläufe der Signale der Signalgeber der Schutzeinrichtungen.

In einer ersten Ausführungsform der Erfindung ist vorgesehen, daß durch die Überwachungseinrichtung eine Aufzeichnung dieser zuvor skizzierten Signale erfolgt. Diese Informationen können dann von autorisiertem Bedienpersonal aufgerufen werden, um zu überprüfen, ob bestimmte Wartungsmaßnahmen tatsächlich auch ordnungsgemäß ausgeführt wurden. Gemäß einer Weiterbildung der Erfindung ist vorgesehen, daß bereits bei Ausführen der Wartungsmaßnahmen die Signale der Signalgeber (Verschutzung) in Verbindung mit den Signalen für den Hauptantrieb der Druckmaschine und gespeicherten Daten verglichen werden, um insbesondere über den Leitstand der Druckmaschine anzuzeigen, daß eine bestimmte Maßnahme richtig ausgeführt worden ist und daß auf eine korrekt ausgeführte Maßnahme eine entsprechend vorgesehene nächste Maßnahme vorzunehmen ist. Die entsprechenden Arbeitsanweisungen (Positionieren der Maschine, Öffnen bestimmter Schutzeinrichtung) ist dann über den Monitor des Leitstandes anzeigbar.

Gemäß einer Weiterbildung der Erfindung steht die Überwachungseinrichtung mit einem Zeitgeber (Uhr) in Signalverbindung, so daß bestimmte Betriebszustände (anfahren einer bestimmten Position, Verweildauer innerhalb dieser Position, Tritt- bzw. Schiebeschutz geöffnet / geschlossen) erfaßbar und auswertbar sind. Diese Zustandszeiten sind ferner auch mit gespeicherten Mindestzeiten vergleichbar, wobei hier ein Plausibilitätskriterium zugrunde gelegt wird, dahingehend, daß beim ordnungsgemäßen Ausführen einer bestimmten Wartungsarbeit (Abschmieren der Lager einer Greiferwelle bzw. Ausführen einer bestimmten Einstellarbeit) die Maschine eine bestimmte Mindestzeitdauer in dieser Position verweilen muß.

### [Beispiele]

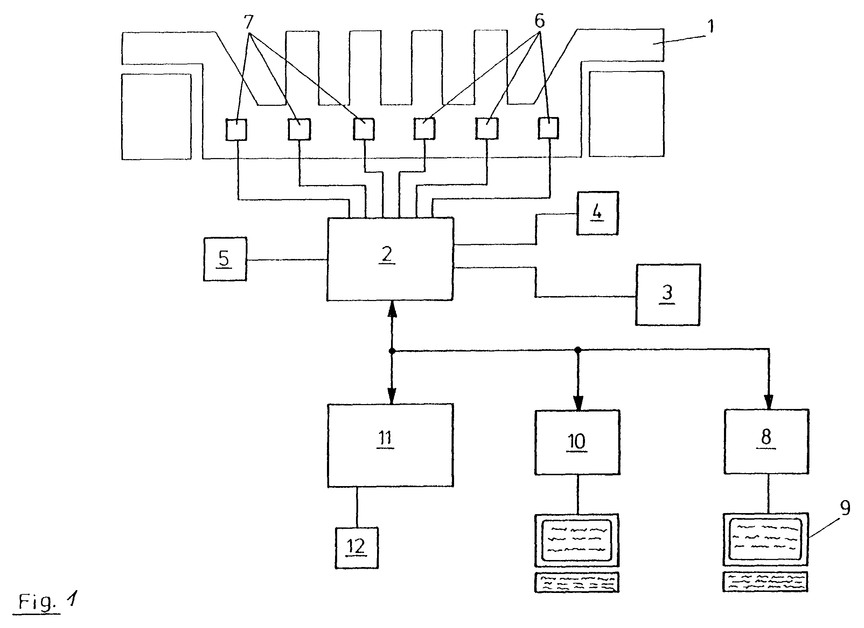

Des weiteren erfolgt die Erläuterung von zwei Ausführungsbeispielen der Erfindung anhand der beiden Zeichnungen. Fig. 1 zeigt eine Bogenoffsetdruckmaschine mit Maschinensteuerung, zugeordnetem Leitstandrechner, einem Rechner für die Produktionsplanung und Überwachung sowie den erfindungsgemäßen Wartungs- und Inspektionsrechner.

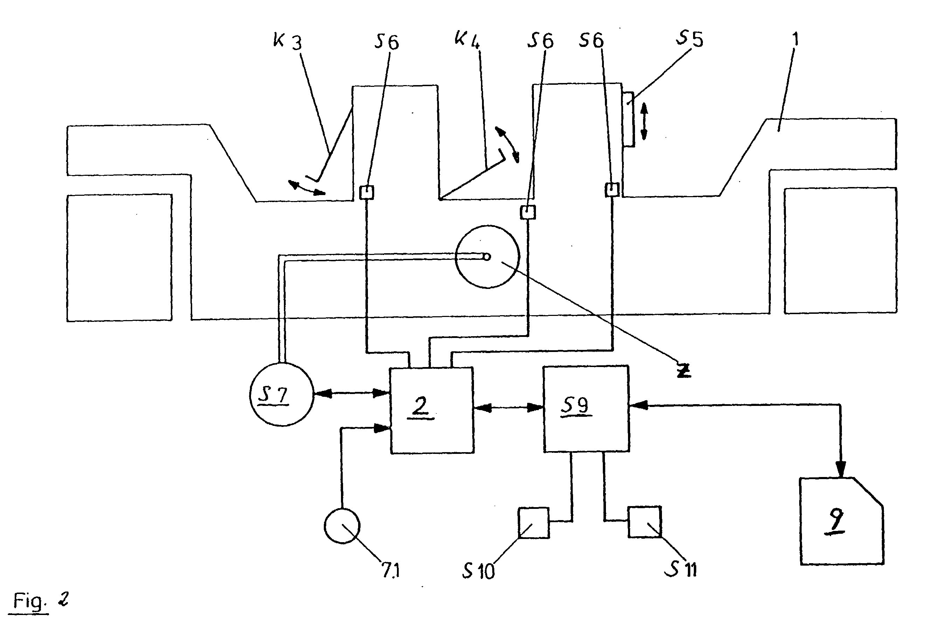

Fig. 2 zeigt eine Bogenoffsetdruckmaschine mit den exemplarisch angedeuteten Schutzeinrichtungen zugeordneten Signalgebern, einer Steuerung sowie den Hauptantrieb der Maschine.

Zu Fig. 1: Eine Druckmaschine 1 - dargestellt ist eine Bogenoffsetdruckmaschine - weist eine aus einem oder mehreren Rechnern bestehende Steuerung 2 auf. Die Steuerung 2 steht mit einem Hauptantrieb 3 der Druckmaschine 1, weiteren Antrieben 4, 5, in der Druckmaschine 1 angeordneten Sensoren 6 sowie den Verschutzungen zugeordneten Endschaltern 7 in Signalverbindung. Bei den Antrieben 4, 5 handelt es sich insbesondere um die Antriebe im Anleger, Ausleger der Druckmaschine 1, bzw. um die fernansteuerbaren Stellantriebe für das Register- bzw. die Farbführung (Farbdosierelemente). Die Stellbefehle für den Hauptantrieb 3, die Antriebe 4, 5 sowie die Signale der Sensoren 6 und der Endschalter 7 werden durch die Steuerung 2 der Druckmaschine 1 erfaßt und die Steuerung 2 löst die für die jeweilige Betriebssituation nötigen Folgen aus.

Die Steuerung 2 der Druckmaschine 1 steht mit einem Leitstandrechner 8 eines Leitstandes 9 der Druckmaschine in Signalverbindung. Über eine Eingabevorrichtung nebst Monitor des Leitstandes 9 sind bestimmte, über den Leitstandrechner 8 von der Steuerung 2 der Druckmaschine 1 abrufbare Daten darstell- und änderbar und ferner auch bestimmte Komponenten der Druckmaschine 1 fernbedienbar. Über den Leitstand 9 erfolgt auch die Eingabe von spezifischen Daten, wie insbesondere der Bedruckstoffsorte, Format, Zahl und Art der verdruckten Farben usw.. Im Leitstandrechner 8 werden weiterhin die über die Steuerung 2 der Druckmaschine 1 erfaßbaren Informationen über Druckgeschwindigkeit, Bogenzahl, Anzahl und Größe der während eines Druckauftrages ausgeführten Registerstellbefehle, Anzahl der Eingriffe auf die Farbführung usw. gespeichert

Mit dem Leitstandrechner 8 des Leitstandes 9 der Druckmaschine 1 steht weiterhin ein Rechner 10 der Produktionsplanung / Produktionssteuerung in Signalverbindung. Über diesen Rechner 10, der mit weiteren Leitstandrechnern nicht dargestellter Druckmaschinen in Signalverbindung steht, erfolgt die Feststellung der Verfügbarkeit der Maschine sowie die Planung zukünftig auszuführender Druckaufträge. Dieser Rechner 10 kann mit weiteren Arbeitsplätzen der Druckereisteuerung in Signalverbindung stehen, über welche Einstelldaten / Voreinstelldaten künftig auszuführender Druckaufträge erfaßbar sind.

Mit der Steuerung 2 der Druckmaschine 1 steht der erfindungsgemäße Wartungs- und Inspektionsrechner 11 in direkter Signalverbindung. Weiterhin steht der Wartungs- und Inspektionsrechner 11 über das die Steuerung 2 mit dem Leitstandrechner 8 verbindende Netzwerk in Verbindung. Der Leitstandrechner 8 und der Rechner 10 der Produktionssteuerung / Planung sind ihrerseits mit einem Netzwerk miteinander verbunden, so daß der erfindungsgemäße Wartungs- und Inspektionsrechner 11 auch mit diesen Einrichtungen in Signalverbindung steht.

Wie bereits zuvorstehend erläutert wurde, werden dem Wartungs- und Inspektionsrechner 11 eine Vielzahl von Daten der Steuerung 2 zugeführt. Dies sind insbesondere die Stellbefehle für den Hauptantrieb 3 der Druckmaschine 1, Stellbefehle für die Antriebe 4, 5 sowie Signalzustände der Sensoren 6 und der Endschalter 7. Diese Signale dokumentiert der Wartungs- und Inspektionsrechner zwecks Herleitung von nötigen Wartungsmaßnahmen, wobei dazu in einem Speicher 12 bereitgestellte Informationen mitberücksichtigt werden. Dies sind insbesondere Qualitätsmerkmale der verschiedenstes Elemente der Druckmaschine. Der Wartungs- und Inspektionsrechner steht mit dem Leitstandrechner 8 des Leitstandes 9 der Druckmaschine 1 in Signalverbindung, so daß über ein am Monitor des Leitstandes 9 darstellbares Wartungsmenü der Umfang einer ermittelten Wartungsarbeit darstellbar ist. Über den Leitstand 9 erfolgt ferner auch das Quittieren ausgeführter Wartungsvorgänge, wobei der Wartungs- und Inspektionsrechner 11 eine ausgeführte Wartungsmaßnahme zusätzlich anhand der Signale der Sensoren 6 / der Endschalter 7 in Verbindung mit den Stellbefehlen der Antriebe 3, 4, 5 plausibilisiert.

Erfindungsgemäß ermittelt der Wartungs- und Inspektionsrechner 11 die Notwendigkeit von Wartungsmaßnahmen bestimmter Einzelkomponenten in deren Gesamtheit und insbesondere in Verbindung mit den Informationen künftig auszuführender, geplanter Druckaufträge. Dazu werden dem Wartungs- und Inspektionsrechner 11 zusätzlich Informationen des Rechners 10 aus der Auftragsvorbereitung / der Produktionsplanung zugeleitet.

Zu Fig. 2: Eine schematisch dargestellte Bogenoffsetdruckmaschine 1 weist eine Anzahl Zylinder bzw. Trommeln auf, wobei aus Gründen der Einfachheit lediglich ein Zylinder Z dargestellt ist. Zwischen den Druckwerken bzw. an den Vorder- bzw. Rückseiten der einzelnen Druckwerke sind Klappschutze K3, K4 bzw. Schiebeschutze S5 angebracht. Diese sind mit Signalgebern S6 in Form von Endschaltern bzw. Sensoren elektrisch abfragbar ausgestattet, wobei die Signale der Signalgeber S6 der Steuerung S8 der Druckmaschine 1 und über diese der in der Funktionsweise noch weiter unten stehend erläuterten Überwachungseinrichtung S9 zugeleitet werden.

Die Steuerung 2 der Druckmaschine 1 steht in Signalverbindung mit dem beispielsweise als Gleichstrommotor ausgebildeten Hauptantrieb S7, der über ein nicht dargestellten Räderzug und/oder eine Welle die Trommeln und Zylinder der Maschine antreibt. Insbesondere sind über nicht dargestellte und mit der Steuerung 2 der Druckmaschine 1 in Signalverbindung stehende Taster (Bedienelemente) bestimmte Positionen anfahrbar. Zum Anfahren bestimmter Positionen steht die Steuerung S8 der Druckmaschine 1 mit einem Winkelgeber 7.1 in Wirkverbindung.

Ist beispielsweise vorgesehen, die nicht dargestellten Greifereinrichtungen auf dem Zylinder Z mit Schmierstoff zu versehen, so ist es nötig die Maschine und somit den Zylinder Z in eine bestimmte Position zu verfahren, dergestalt, daß die Greifer auf dem Zylinder Z von oben zugänglich sind. Nach Anfahren der entsprechenden Position (Generierung von Steuerbefehlen durch die Steuerung 2) wird der Klapptritt K4 geöffnet, so daß durch die Überwachungseinrichtung S9 und den entsprechenden Signalgeber S6 ein Signal feststellbar ist. Die erfindungsgemäße Überwachungseinrichtung S9 steht mit einer Uhr S10 sowie einem Speicher S11 in Signalverbindung. Die Uhr S10 kann der Zeitgeber des Rechners der Überwachungseinrichtung S9 sein. In dem Speicher S11 werden in Verbindung mit der Uhrzeit der entsprechenden Wartungsmaßnahme die dabei vorgenommenen Maßnahmen (Anfahren der Maschinenposition, Öffnen / Schließen der Schutze K3, K4, K5) aufgezeichnet. Die Überwachungseinrichtung S9 steht mit dem Leitstand S9 der Druckmaschine 1 in Wirkverbindung, so daß in einem von einer autorisierten Bedienperson aufrufbaren Menü die zu einem bestimmten Zeitpunkt ausgeführten Handhabungen in Verbindung mit der jeweiligen Zeitdauer auswertbar sind.

Gemäß einer bevorzugten Weiterbildung der Erfindung sind im Speicher S11 für bestimmte Wartungsmaßnahmen anzufahrende Maschinenpositionen (Winkelstellungswerte) in Verbindung mit den dabei zu öffnenden oder zu schließenden Schutzeinrichtungen (Klappschutze K3, K4, Schiebeschutze S5) abgespeichert. Die Signale des Winkelgebers 7.1 sind durch die erfindungsgemäße Überwachungseinrichtung S9 ebenfalls erfaßbar und werden vorzugsweise in Verbindung mit im Speicher S11 zu bestimmten Wartungsmaßnahmen vorgesehenen Soll-Positionen verglichen.

Gemäß einer Weiterbildung der Erfindung ist vorgesehen, daß über den Leitstand S12 der Druckmaschine 1 innerhalb eines speziellen Menüs Wartungsmaßnahmen aufrufbar sind, dergestalt, daß der Bedienperson die vorzunehmenden Handlungen aufgezeigt werden. Dabei kann vorgesehen sein, daß nach Ausführen einer ersten Wartungsmaßnahme (bspw. Abschmieren der Greifereinrichtung eines Zylinders / einer Trommel) und dem Feststellen des ordnungsgemäßen Ausführens dieser Maßnahme daraufhin die nachfolgend vorzunehmende Wartungsmaßnahme angezeigt wird. Das Bedien- bzw. Servicepersonal wird somit durch die Überwachungseinrichtung S9 in Verbindung mit über einen Monitor am Leitstand S9 darstellbaren Anweisungen durch die Wartungsarbeiten geführt.

### [Bezugszeichenliste]

- 1: Druckmaschine
- 2: Steuerung
- 3: Hauptantrieb (Druckmaschine 1)
- 4: Antrieb
- 5: Antrieb
- 6: Sensor
- 7: Endschalter
- 8: Leitstandrechner
- 9: Leitstand (Druckmaschine 1)
- 10: Rechner (Produktionsüberwachung / Produktionsplanung / Drucksaalsteuerung)
- 11: Wartungs- und Inspektionsrechner
- 12: Speicher (Wartungs- und Inspektionsrechner 11)

- Z: Zylinder
- K3: Klappschutz
- K4: Klappschutz
- S5: Schiebeschutz
- S6: Signalgeber (Sensor, Endschalter)
- S7: Hauptantrieb (Motor)
- 7.1: Winkelgeber
- S8: Steuerung (Druckmaschine 1)
- S9: Überwachungseinrichtung
- S10: Uhr (Zeitgeber)
- S11: Speicher
- S12: Leitstand (Druckmaschine 1)

## Patentansprüche

1. Druckmaschine, vorzugsweise Bogenoffsetdruckmaschine, mit einem Wartungs- und Diagnosesystem bestehend aus einer wenigstens einen Rechner umfassenden Steuerung (2), die mit als Sensoren (6) und/oder Endschaltern (7) ausgebildeten Signalgebern verbunden ist und über welche der Hauptantrieb (3) sowie weitere Antriebe (4, 5) der Maschine ansteuerbar sind, wobei die Steuerung (2) der Druckmaschine (1) mit einem Daten ausgeführter Druckaufträge enthaltenden Leitstandrechner in Wirkverbindung steht, wobei
ein Wartungs- und Inspektionsrechner (11) vorgesehen ist, der mit der Steuerung (2) und dem Leitstandrechner (8) in Signalverbindung steht und welchem die über die Steuerung (2) erfaßbaren Signale der Antriebe (3, 4, 5) sowie der Signalgeber (6, 7) zugeführt werden und wobei durch den Wartungs- und Inspektionsrechner (11) aus diesen Signalen den Zustand von Verbrauchsstoffen, die Beanspruchung sowie den Verschleiß vorgesehener Maschinenkomponenten wiedergebende Größen abgeleitet und daraus die Zeitpunkte sowie der Umfang entsprechender Wartungsmaßnahmen ermittelt werden, **dadurch gekennzeichnet, daß** durch den Wartungs- und Inspektionsrechner (11) aus den über die Steuerung (2) zugeführten Signalen der Antriebe (3, 4, 5) sowie der Signalgeber (6, 7) die durchzuführenden Wartungsmaßnahmen überwacht werden.

2. Druckmaschine gemäß Anspruch 1,
**dadurch gekennzeichnet,**
**daß** der Wartungs- und Inspektionsrechner (11) mit einem Informationen über für die Druckmaschine (1) geplante Druckaufträge enthaltenen weiteren Rechner (10) in Signalverbindung steht, und daß durch den Wartungs- und Inspektionsrechner (11) die Zeitpunkte sowie der Umfang der Wartungsmaßnahmen in Verbindung mit diesen Informationen ermittelbar sind.

3. Druckmaschine gemäß einem der vorhergehenden Ansprüche,
**dadurch gekennzeichnet,**
**daß** durch den Wartungs- und Inspektionsrechner (11) über den Leitstand (9) des Leitstandrechner (8) manuell eingebbare Informationen über durchgeführte Wartungsmaßnahmen erfaß- und verarbeitbar sind.

4. Druckmaschine nach einem der vorhergehenden Ansprüche,
**dadurch gekennzeichnet,**
**daß** eine Überwachungseinrichtung (9) vorgesehen ist, der die Signale eines an der Druckmaschine (1) angebrachten Winkelgebers (7.1) zuführbar sind, und
**daß** die Überwachungseinrichtung (9) einen Speicher (11) aufweist, in welchem die durch den Winkelgeber (7.1) erfaßten Positionen der Druckmaschine (1) in Verbindung mit durch die Überwachungseinrichtung (9) erfassbaren Signalen der Bedienelemente und der Signalgeber (6) abspeicherbar sind.

5. Druckmaschine nach Anspruch 4,
**dadurch gekennzeichnet,**
**daß** in dem Speicher (11) die durch den Winkelgeber (7.1) erfaßbaren Positionen der Druckmaschine (1), die Signale der Bedienelemente und der Signalgeber (6) in Verbindung mit Zeitsignalen einer Uhr (10) abspeicherbar sind.

6. Druckmaschine nach Anspruch 4 oder 5,
**dadurch gekennzeichnet,**
**daß** die Überwachungseinrichtung (9) mit dem Leitstand (12) der Druckmaschine (1) in Signalverbindung steht, über den die im Speicher (11) erfaßten Zustände abrufbar sind.

7. Druckmaschine nach Anspruch 5 oder 6,
**dadurch gekennzeichnet,**
**daß** in dem Speicher (11) zu bestimmten vorzunehmenden Handlungen die anzufahrenden Positionen der Druckmaschine (1), der Bedienelemente und Signalzustände der Signalgeber (6) abgespeichert sind, und daß beim Ausführen einer entsprechenden Handlung diese gespeicherten Signalzustände mit den aktuell erfaßbaren Signalen in Verbindung mit der Zeit der Uhr (10) auswertbar und vergleichbar sind.

8. Druckmaschine nach Anspruch 8,
**dadurch gekennzeichnet,**
**daß** in dem Speicher (11) zu einer Vielzahl vorzunehmender Wartungsmaßnahmen die jeweils vorzunehmenden Arbeitsschritte abgespeichert sind, und daß über eine Anzeigevorrichtung (12) eine Darstellung des jeweils vorzunehmenden Arbeitsschrittes erfolgt.

9. Druckmaschine nach Anspruch 8 oder 9,
**dadurch gekennzeichnet,**
**daß** in dem Speicher (11) zu einer Vielzahl vorzunehmender Wartungsmaßnahmen die jeweils vorzunehmenden Arbeitsschritte abgespeichert sind, und daß durch die Überwachungseinrichtung (9) eine Freigabe eines Arbeitsschrittes in Abhängigkeit eines zuvor ausgeführten Arbeitsschrittes erfolgt.

## Claims

1. Printing press, preferably an offset sheet printing press, with a maintenance and diagnostic system consisting of a control (2) comprising at least one computer, which is connected with signal providers constructed as sensors (6) and/or limit switches (7) and via which the main drive (3) as well as further drives (4, 5) of the press can be controlled, wherein the control (2) of the press (1) is operationally connected with a control desk computer containing data relating to executed print orders, wherein a maintenance and diagnostic computer (11) is provided which is connected by way of signalling with the control (2) and the control desk computer (8) and to which the signals of the drives (3, 4, 5) which can be detected via the control (2) as well as of the signal emitters (6, 7) can be fed and wherein, by the maintenance and diagnostic computer (11), from these signals the condition of consumable materials, and figures reproducing the stress as well as the wear of previously provided machine components are derived and from this the points in time as well as the scope of corresponding maintenance measures are determined, **characterised in that** via the maintenance and diagnostic computer (11) from the signals fed via the control (2) of the drives (3, 4, 5) as well as of the signal emitters (6, 7), the maintenance measures which are to be carried out are monitored.

2. Printing press according to Claim 1, **characterised in that** the maintenance and diagnostic computer (11) is in signal communication with a further computer containing information about the print orders planned for the printing press (1), and that via the maintenance and diagnostic computer (11), the points in time as well as the scope of the maintenance measures can be detected in combination with this information.

3. Printing press according to one of the preceding Claims, **characterised in that** by the maintenance and diagnostic computer (11) via the control desk (9) of the control desk computer (9), manually inputtable information about maintenance measures which have been carried out can be detected and processed.

4. Printing press according to one of the preceding Claims, **characterised in that** a monitoring device (S9) is provided to which the signals of an angle sensor (7.1) fitted on the printing press (1) can be fed and that the monitoring device (S9) has a store (S11) in which the position of the printing press (1) sensed by the angle sensor (7.1) can be stored in combination with signals which can be detected via the monitoring device (S9) of the servicing elements and of the signal emitter (S6).

5. Printing press according to Claim 4, **characterised in that** in the store (S11), the positions of the printing press (1) which can be detected by the angular sensor (7.1), the signals of the operational elements and of the signal emitter (S6) can be stored in combination with time signals of a clock (S10).

6. Printing press according to Claim 4 or 5, **characterised in that** the monitoring device (S9) is connected by way of signalling with the control desk (S12) of the printing press (1), via which the conditions detected in the store (S11) can be called up.

7. Printing press according to Claim 5 or 6, **characterised in that** in the store (S11) for given procedures to be undertaken, the positions of the printing press (1) of the servicing element and signal conditions of the signal emitters (S6) are stored and that, on carrying out a corresponding procedure, these stored signal conditions can be evaluated and can be compared with the actually detected signals in combination with the time of the clock (S10).

8. Printing press according to Claim 7, **characterised in that** in the store (S11) for a plurality of maintenance measures to be undertaken, the respectively to be undertaken working steps are stored and that, via an indicator device (S12), an illustration of the working step respectively to be undertaken takes place.

9. Printing press according to Claim 7 or 8, **characterised in that** in the store (S11), the working steps respectively to be undertaken for a plurality of maintenance measures to be undertaken are stored and that, via the monitoring device (S9), a release of a working step takes place in dependence on a previously executed working step.

## Revendications

1. Machine d'impression, de préférence machine d'impression offset à feuilles, comportant un système de maintenance et de diagnostic, constitué d'un système de commande (2) comprenant au moins un ordinateur et relié à des émetteurs de signaux conçus sous forme de capteurs (6) et/ou d'interrupteurs de fin de course (7) et permettant de commander l'entraînement principal (3) ainsi que d'autres entraînements (4, 5) de la machine, dans lequel cas, le système de commande (2) de la machine d'impression (1) se trouve en liaison active avec un ordinateur centralisé qui contient les données inhérentes aux ordres d'impression préalablement exécutés et dans lequel est prévu un ordinateur de maintenance et de vérification (11), lequel est relié par signaux avec le système de commande (2) et avec l'ordinateur centralisé (8) et auquel sont transmis les signaux émis par les entraînements (3, 4, 5) et par les transmetteurs de signaux (6, 7) qui peuvent être enregistrés par le système de commande (2) et dans lequel l'ordinateur de maintenance et de vérification (11) déduit des signaux reçus des valeurs qui reproduisent l'état des consommables, les contraintes et l'état d'usure de certaines composantes de la machine et calcule les moments et l'étendue des interventions de maintenance,
**caractérisée en ce que** les interventions de maintenance qui doivent être réalisées sont surveillées par l'ordinateur de maintenance et de surveillance (11), à partir des signaux des entraînements (3, 4, 5) et d'émetteurs de signaux (6, 7) transmis par l'intermédiaire du système de commande (2).

2. Machine d'impression selon la revendication 1,
**caractérisée en ce que** l'ordinateur de maintenance et de vérification (11) est relié par signaux avec un autre ordinateur (10) contenant des informations concernant les ordres d'impression prévus pour la machine d'impression (1) et **en ce que** les moments et l'étendue des interventions de maintenance peuvent être définis par l'ordinateur de maintenance et de surveillance (11), en liaison avec lesdites informations.

3. Machine d'impression selon l'une quelconque des revendications précédentes,
**caractérisée en ce que** l'ordinateur de maintenance et de vérification (11) est apte à enregistrer et à traiter des informations concernant les interventions de maintenance réalisées, lesquelles informations peuvent être saisies manuellement par l'intermédiaire du poste de commande (9) de l'ordinateur centralisé (8).

4. Machine d'impression selon l'une quelconque des revendications précédentes,
**caractérisée en ce qu'**un système de surveillance (9) qui peut recevoir les signaux émis par un capteur angulaire (7.1) placé sur la machine d'impression (1) est prévu, et **en ce que** le système de surveillance (9) est équipé d'une mémoire (11) dans laquelle il est possible d'enregistrer les positions de la machine d'impression (1) enregistrées par le capteur angulaire, en liaison avec les signaux émis par les éléments de réglage et par les transmetteurs de signaux et pouvant être détectés par le système de surveillance (9).

5. Machine d'impression selon la revendication 4,
**caractérisée en ce que** les positions de la machine d'impression qui peuvent être détectées par le capteur angulaire (7.1) ainsi que les signaux des éléments de réglage et des transmetteurs de signaux (6) peuvent être conservés dans la mémoire (11), en liaison avec des signaux horaires émis par une horloge (10).

6. Machine d'impression selon l'une quelconque des revendications 4 ou 5,
**caractérisée en ce que** le système de surveillance (9) est relié par signaux avec la poste de commande (12) de la machine d'impression (1), par l'intermédiaire duquel les états conservés dans la mémoire (11) peuvent être interrogés.

7. Machine d'impression selon l'une quelconque des revendications 5 ou 6,
**caractérisée en ce que** les positions dans lesquelles la machine d'impression (1) et les éléments de réglage doivent être amenés et les états requis des transmetteurs de signaux (6) pour certaines tâches précises à réaliser sont conservés dans la mémoire (11) et **en ce que** lors de l'exécution d'une tâche déterminée, ces états de signaux mémorisés peuvent être évalués et comparés avec les signaux actuellement enregistrés, en liaison avec l'heure indiquée par l'horloge (10).

8. Machine d'impression selon la revendication 8,
**caractérisée en ce que** les étapes de travail respectives correspondant à un grand nombre d'interventions de maintenance sont conservées dans la mémoire (11) et **en ce que** l'étape de travail qui doit être réalisée est représentée sur un dispositif d'affichage (12).

9. Machine d'impression selon l'une quelconque des revendications 8 ou 9,
**caractérisée en ce que** les étapes de travail respectives correspondant à un grand nombre d'interventions de maintenance sont conservées dans la mémoire (11) et **en ce que** le système de surveillance (9) valide une étape de travail, en fonction d'une étape de travail préalablement réalisée.
